# EUROPEAN PATENT APPLICATION

(11) **EP 2 177 794 A1**
(43) Date of publication of application: **21.04.2010**
(21) Application number: 09173355.0
(22) Date of filing: 16.10.2009
(51) Int. Cl.: F16J 15/16, F16J 15/32

(54) **Seal for rotating shafts in low to medium pressure applications**

(30) Priority: 20.10.2008 IT PR20080066
(71) Applicant: A.T.P. S.p.A., 41100 Modena (IT)
(72) Inventor: Zacche', Vanni, 41100, MODENA (IT)
(74) Representative: Guareschi, Antonella

(57) **Abstract**

The invention finds application in the field of seals for rotating shafts.

The seal is composed of two sealing elements (1) and (2) of different geometries and different materials. The element (1) is made of a tougher material, such as polytetrafluoroethylene, whereas the element (2) is made of an elastic material, such as a thermoplastic polyurethane elastomer.

The element (2) has a variable geometry, depending on the operating pressure of the fluid, and has a point (2b) of contact on the surface of the shaft (5) that may move away from such contact as pressure increases, thereby causing the sealing effect to be ensured by the element (1).

The operation threshold of either sealing element depends on the selected materials and geometries of such elements.

## Description

The present invention relates to a seal device for rotating shafts in low to medium pressure applications, which is composed of two sealing elements of different geometries and materials.

In prior art, different sealing systems are typically used in response to different operating pressures and rotating speeds, such as:
- Oil rings for low operating pressures (0-2 bar). These are traditional sealing elements which prevent lubricants or other liquids or gases from leaking between a rotating shaft and the hole of the support through which it extends.
- Roto Glyd Ring ® seals for medium pressures (to a few tens of bar). These seals are energized by an O-ring and are used for rotary joints.
- Etc...

The main drawbacks of the prior art are that different devices must be used for different pressure ranges, and that the sealing quality and life are affected in any application in which the pressure range is subjected to abrupt changes from zero or low pressures to pressures a few tens of bar higher.

Therefore, the object of the present invention is to combine the characteristics of the above sealing systems into a single seal system that can operate in a pressure range from zero to a few tens of bar.

A first advantage of the device of the present invention is that different materials are provided for dynamic contact, i.e. polytetrafluoroethylene (PTFE) for the first element and a thermoplastic polyurethane elastomer for the an element having an inclined sliding surface, ensuring a sealing action at fluid operating pressures from zero to a few tens of bar.

Secondly, the lack of energizing elements as provided in the Roto Glyd Ring ®, or springs, allows the present system to operate at lower shaft contact pressures than traditional systems.

Another advantage, resulting from the clearance existing between the elastomerici seal and a wall of the housing groove, is the provision of a floating system that ensures a homogeneous distribution of contact pressure and has no fixed contact points in case of eccentricity and inclination inaccuracies in the metal parts (see the self-adjustable seal disclosed in the patent application MI2006A002057, "Guarnizione Autoadattabile", by the applicant hereof).

These objects and advantages are achieved by the seal for rotating shafts in low to medium pressure applications of the present invention, which is characterized by the content of the annexed claims.

This and other features will be more apparent from the following description of a few embodiments, which are shown by way of example and without limitation in the accompanying drawings, in which:

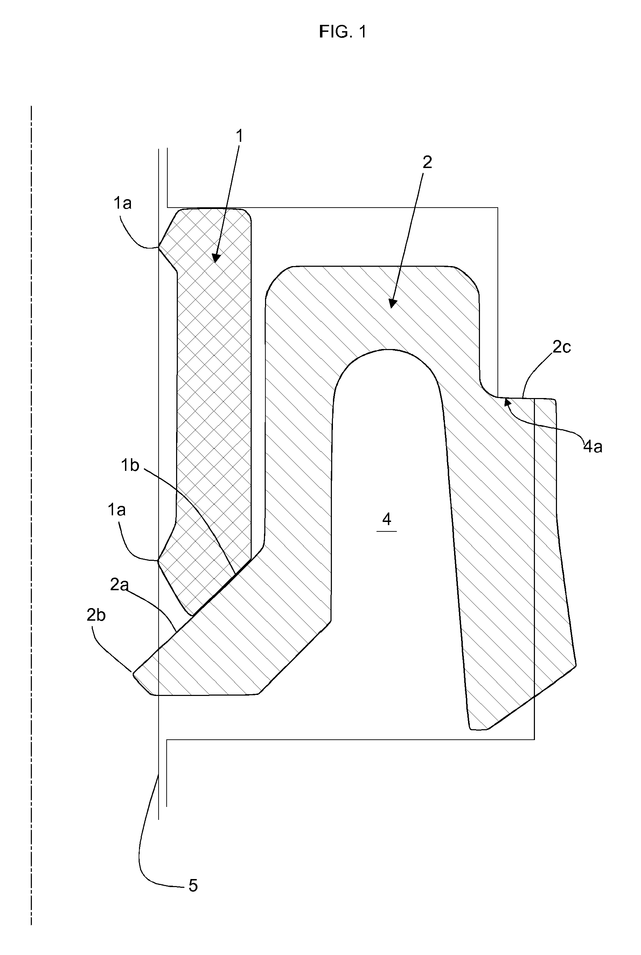

- Figure 1 is a partial vertical cross-sectional view of the device before insertion thereof into the groove;

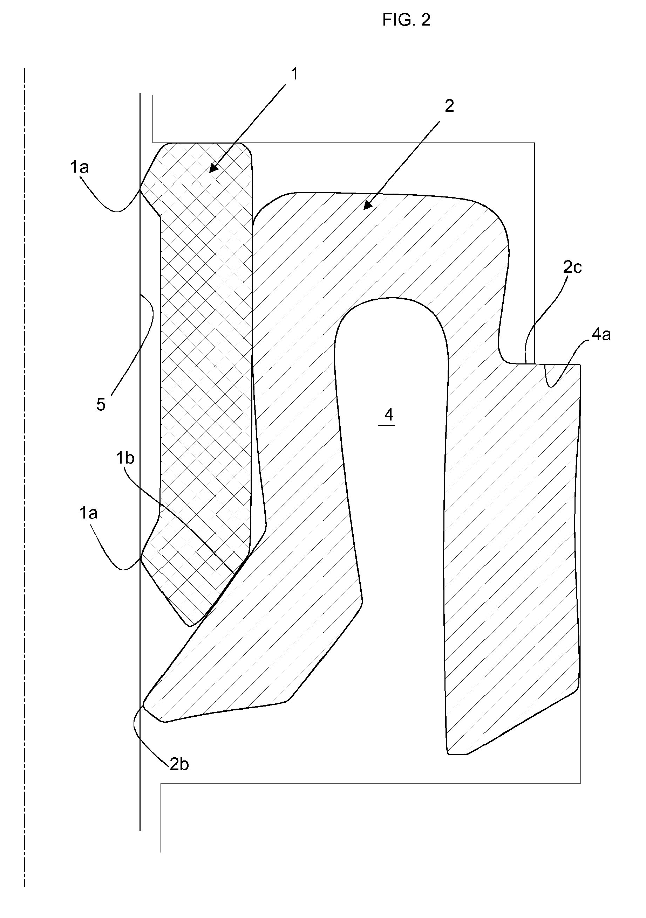

- Figure 2 is a partial vertical cross-sectional view of the device in the groove, in case of low pressure;
- Figure 3 is a partial vertical cross-sectional view like that of Figure 2, in case of medium pressure;
- Figure 4 is a partial vertical cross sectional view of the device in a traditional groove, with a ring acting as a bracket, allowing this sealing system to be received in an existing non-dedicated traditional groove.

Referring to the figures, numeral 1 designates a first sealing element, substantially consisting of a sliding polytetrafluoroethylene (PTFE) member.

The first element 1 has two seal lips (1a) in contact with the surface of the shaft 5.

Numeral 2 designates a second sealing element made of a thermoplastic polyurethane elastomer, which has an inclined sliding surface 2a, ending at one point 2b designed for contact with the surface o the shaft 5.

The surface 2a of the element 2 is free to slide on the surface 1b of the element 1.

A portion 2c of the elastomeric element 2 abuts against a recess 4a of the groove 4.

The stationary polytetrafluoroethylene element 1 provides the actual sealing effect when, as pressure increases, the point 2b of the element 2 loses contact with the shaft 5; such point is pushed by the element 2 through the inclined surface 2a and applies a force to the surface of the shaft 5 resulting from the operating pressure contained in the groove 4.

In case of low pressures, both elements are in contact with the shaft 5, but the sealing effect is ensured by the element 2 at the point 2b.

In case of medium pressures, the element 2 is pushed upwards.

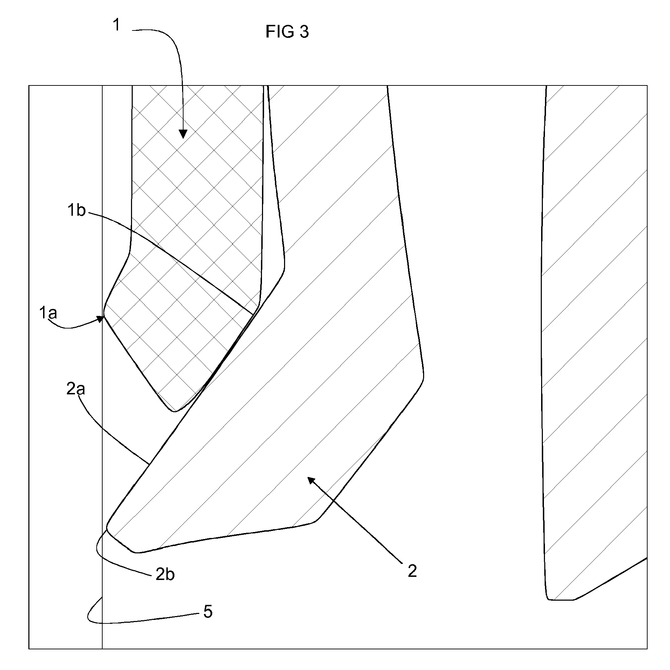

Thus, as the surface 2a slides on the surface 1b, the element 2 tends to move away from the surface of the rotating shaft 5 until it loses contact therewith, as more clearly shown in Figure 3, and the sealing action is ensured by the points 1a.

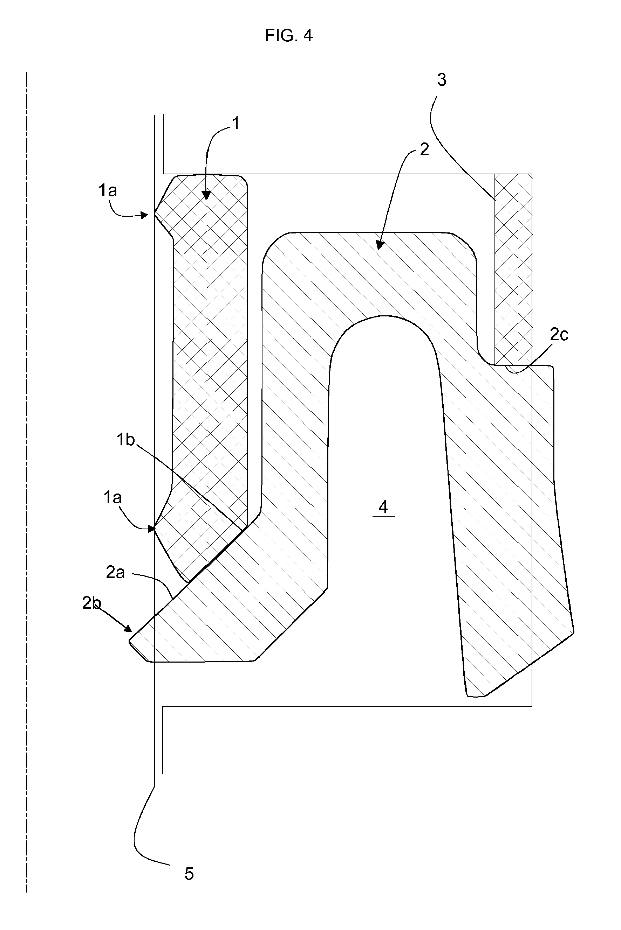

Referring to Figure 4, numeral 3 designates a ring, e.g. made of polyurethane, which is used with traditional grooves.

The operation of the device of the present invention will be now described using the reference numerals of the figures.

The interference-engaging element 2 is the first to be introduced into the groove 4 for seating the device.

It abuts against a recess 4a of the groove, which provides a stationary abutment point 2a; the element 1 is introduced next.

The element 2 is moved to contact with the element 1 by the inclined surface 2a and finally contacts the rotating shaft 5 at one point 2b.

When the fluid operating pressure is low, the element 2 does not move.

As a result, the maximum sealing effect is not ensured by the contact of the two lips 1a of the element 1, but by the point-like contact 2b of the element 2 with the surface of the shaft 5.

As pressure increases, the tip 2b of the element 2 is moved apart and the element 2 pivots about the stationary point 2c and presses the element 1 through the inclined surface 2a, thereby causing the maximum sealing effect to be only ensured by the contact of the seal lips 1a of the element 1 with the surface of the rotating shaft 5.

It should be noted that the proper sealing effect of the system is not only due to the geometry of the two elements, but also to the materials selected therefor.

Thus, as pressure increases, when the elastomer might be exposed to overheating problems, caused by a combination of high pressure and contact dynamics, the use of polytetrafluoroethylene (PTFE) is better responsive to the above combination.

An embodiment will be now described as one of the many possible solutions.

The peculiar characteristics of the materials selected for the device of the invention are as follows:
1) SINTEK®-J-AL:
   Polytetrafluoroethylene (PTFE), a tetrafluoroethylene-based thermoplastic polymer. This material does not have the elastic properties of rubber but exhibits:
   i) chemical inertness, which ensures compatibility with almost any existing fluid and chemical;
   ii) low friction coefficient (self-lubricating properties);
   iii) resistance to temperatures from - 200°C to +260°C;
   iv) proper balance of toughness and flexibility.
   In another embodiment, another material, either of plastic or viscoelastoplastic nature, might be used instead of PTFE.
2) SINTEK®-H-TPU:
   A thermoplastic polyurethane elastomer, which might be replaced, in another embodiment, by other materials of hyperelastic nature.
   Other materials may be obviously used instead of those described above, and the geometry and size of the elements may be also varied, for control of the operation threshold of either sealing element.

## Claims

1. A seal for rotating shafts in low to medium pressure applications, **characterized in that** it is composed of two sealing elements (1) and (2) of different materials, always in direct contact by two coupled surfaces (1b) and (2a); the sealing element (2) has a variable geometry.

2. A seal for rotating shafts in low to medium pressure applications as claimed in claim 1, **characterized in that**, in response to fluid pressure changes, the variable geometry element (2) is allowed to slide freely relative to the element (1) a certain clearance being provided between the elastomeric seal and the wall of the groove.

3. A seal for rotating shafts in low to medium pressure applications as claimed in claim 1, **characterized in that** the variable geometry element (2) has an inclined surface (2a) allowing it to slide on the element (1).

4. A seal for rotating shafts in low to medium pressure applications, **characterized in that** the two elements that compose it are made from different materials, having different mechanical, physical and thermal properties; the first element (1) is made of a material selected for its toughness and wear-resistance; the second element (2) is made of an elastic material having high sealing properties.

5. A seal for rotating shafts in low to medium pressure applications as claimed in claim 4, **characterized in that** the first element (1) is made of SINTEK®-J-AL (polytetrafluoroethylene), the second element is made of SINTEK®-H-TPU (thermoplastic polyurethane elastomer).

6. A seal for rotating shafts in low to medium pressure applications as claimed in claims 2, 4 and 5, **characterized in that** it has a ring (3) adapted to be fitted into a traditional groove and acting as a support to provide a pivot point for the sealing element (2).
